Europäisches Patentamt

European Patent Office

Office européen des brevets

(11) Veröffentlichungsnummer: **0 316 686**
**A1**

## EUROPÄISCHE PATENTANMELDUNG

(21) Anmeldenummer: 88118422.0

(22) Anmeldetag: 04.11.88

(51) Int. Cl.4: **G01T 1/29 , H05G 1/60**

(30) Priorität: 17.11.87 DE 3739010

(43) Veröffentlichungstag der Anmeldung:
**24.05.89 Patentblatt 89/21**

(84) Benannte Vertragsstaaten:
**BE DE FR GB**

(71) Anmelder: **Siemens Aktiengesellschaft Berlin
und München**
**Wittelsbacherplatz 2**
**D-8000 München 2(DE)**

(72) Erfinder: **Amtmann, Heribert, Dipl.-Ing. (FH)**
**Zedernstrasse 15**
**D-8521 Langensendelbach(DE)**

(54) **Autoradiographiesystem für Speicherleuchtstoffolien.**

(57) Die Erfindung betrifft ein Autoradiographiesystem für Speicherleuchtstoffolien (6, 9) mit einer Kassette (1) zur Aufnahme von Präparaten (8) und Speicherleuchtstoffolien (6, 9), einer Leseeinheit zum Auslesen der in den Speicherleuchtstoffolien (6, 9) gespeicherten Bilder und zur Erzeugung von diesen Bilden entsprechenden Bildsignalen, mit einer Verarbeitungsschaltung und einer Wiedergabeeinrichtung, bei dem die Kassette (1) ein strahlenabsorbierendes Gehäuse (2) mit Deckel (3), Verschluß (4), Abschirmung (25) und Andruckmittel (5, 10, 11) aufweist, wobei in der Kassette (1) zwei durch eine Abschirmplatte (7) getrennte Speicherleuchtstoffolien (6, 9) vorhanden sind. Die Verarbeitungsschaltung weist eine Subtraktionsvorrichtung auf, die die Bildsignale der beiden durch die Leseeinheit aus den beiden Speicherleuchtstoffolien (6, 9) ausgelesenen Bilder voneinander subtrahiert.

FIG 1

EP 0 316 686 A1

## Autoradiographiesystem für Speicherleuchtstoffolien

Die Erfindung betrifft ein Autoradiographiesystem für Speicherleuchtstoffolien mit einer Kassette zur Aufnahme von Präparaten und Speicherleuchtstoffolien, einer Leseeinheit zum Auslesen der in den Speicherleuchtstoffolien gespeicherten Bilder und zur Erzeugung von diesen Bildern entsprechenden Bildsignalen, mit einer Verarbeitungsschaltung und mit einer Wiedergabeeinrichtung.

In der Autoradiographie werden nach Speicherung eines geeigneten Radioisotops, beispielsweise durch Knochen oder Karzinomzellen, die auf diese Weise zum Selbststrahler gewordenen Gewebe als Präparat mit einer fotografischen Schicht in geeigneter Weise und genügend lange in Kontakt gebracht. Nach der Entwicklung der fotografischen Schicht erhält man eine Abbildung der Ausstrahlung des Gewebes, so daß man auf dessen Aufbau Rückschlüsse ziehen kann.

In der Zeitschrift "Nature", Vol. 326, vom 16. April 1987, Seite 725, ist ein filmloses Autoradiographiesystem beschrieben, bei dem der Film durch eine Speicherleuchtstoffolie mit fotostimulierbarem Phosphor ersetzt worden ist. Durch einen Laser wird diese Speicherleuchtstoffolie nach der Belichtung durch das strahlenemittierende Präparat abgetastet, wobei die Speicherleuchtstoffolie Licht emittiert, das dem in der Speicherleuchtstoffolie gespeicherten Röntgenstrahlenbild entspricht. Das emittierte Licht wird durch einen Detektor erfaßt, dessen Ausgangssignal in ein digitales Signal umgewandelt wird, das einem Rechner zur Speicherung, Analyse und Verarbeitung zugeführt wird. Auf einem Monitor als Wiedergabeeinrichtung kann dann das Bild betrachtet werden. Da die Speicherleucht stoffolien bei Verwendung in der Autoradiographie empfindlicher sind als der konventionelle Röntgenfilm, wird insbesondere während der Belichtungszeit die Speicherleuchtstoffolie neben der Nutzstrahlung des Präparates auch einer Streustrahlung, hervorgerufen durch die kosmische Strahlung, ausgesetzt. Diese Störungen zeigen sich als mehr oder weniger große Punktmuster im Bild und begrenzen dadurch die Empfindlichkeit des Systems.

Weiterhin entsteht bei längerer Belichtungszeit ein thermisches Rauschen der Speicherleuchtstoffolie im Bild, so daß auch hierdurch die Bildqualität beeinträchtigt wird.

Die Erfindung geht von der Aufgabe aus, ein Autoradiographiesystem der eingangs genannten Art zu schaffen, bei dem Störungen, insbesondere hervorgerufen durch kosmische Strahlung sowie thermisches Rauschen, reduziert werden.

Die Aufgabe wird erfindungsgemäß dadurch gelöst, daß die Kassette ein hochenergetische Strahlen absorbierendes Gehäuse mit Deckel, Verschluß und Andruckmittel aufweist, wobei in der Kassette zwei durch eine Abschirmplatte getrennte Speicherleuchtstoffolien vorhanden sind, und daß die Verarbeitungsschaltung eine Subtraktionsvorrichtung aufweist, die die Bildsignale der beiden durch die Leseeinheit aus den beiden Speicherleuchtstofffolien ausgelesenen Bilder voneinander subtrahiert. Dadurch erhält man auf einer ersten Speicherleuchtstoffolie ein Nutzsignal zusammen mit den Störstrukturen sowie auf der zweiten Speicherleuchtstoffolie nur die Störstrukturen, die durch die Subtraktion eliminiert werden.

Das thermische Rauschen läßt sich eliminieren, wenn die Kassette mit einer Wärmeisolierung versehen ist. Die Störeinflüsse durch das thermische Rauschen können weiter reduziert werden, wenn eine Kühlvorrichtung für die Kassette vorgesehen ist. Eine gute Abschirmung des Präparates gegenüber der zweiten Speicherleuchtstoffolie bei gleichzeitig ausreichender Durchlässigkeit der kosmischen Strahlen wird erreicht, wenn die Ab schirmplatte aus Blei oder anderen Materialien besteht und 0,5 mm oder weniger stark ist. Der Einfluß der kosmischen Strahlung niedriger Energie läßt sich weiterhin reduzieren, wenn die Abschirmung des Gehäuses aus 1 bis 2 mm dickem Blei besteht. Es hat sich als vorteilhaft erwiesen, wenn die Andruckmittel wenigstens eine Andruckplatte aufweisen, die durch eine sich an der Kassette abstützende Feder belastet ist.

Im nachfolgenden ist die Erfindung anhand eines in der Zeichnung dargestellten Ausführungsbeispieles näher erläutert. Es zeigen:

Figur 1 eine erfindungsgemäße Kassette zum Einsatz in einem Autoradiographiesystem und

Figur 2 den Wiedergabeteil eines erfindungsgemäßen Autoradiographiesystems.

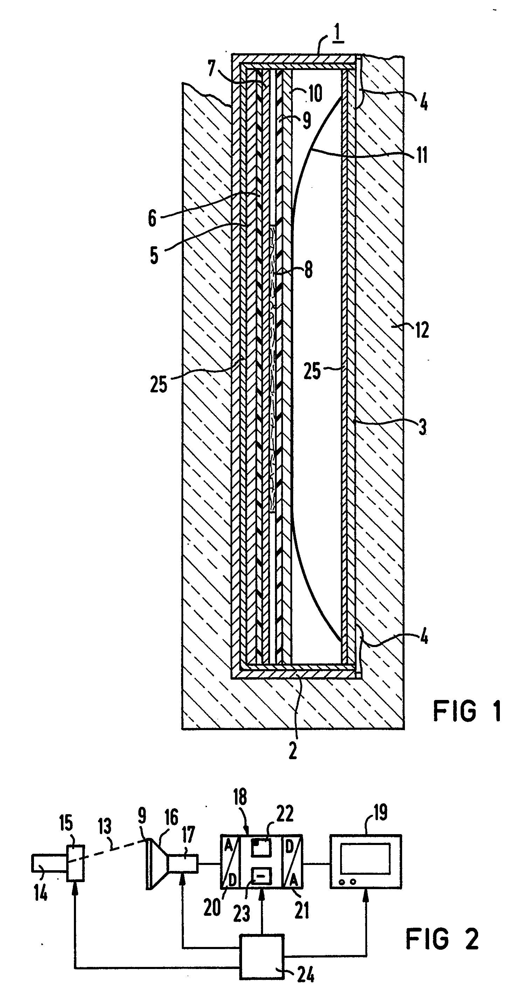

In Figur 1 ist die Kassette 1 im Schnitt dargestellt, die aus einem Gehäuse 2 besteht, das durch einen Deckel 3 mittels eines Verschlusses 4 verschließbar ist. Das Gehäuse 2 und der Deckel 3 der Kassette 1 weisen eine Abschirmung 25 auf, die beispielsweise aus 1 bis 2 mm dickem Blei besteht. In der Kassette 1 ist auf der Seite des Gehäuses 2 eine erste Andruckplatte 5 vorgesehen, auf der sich eine erste Speicherleuchtstoffolie 6 befindet. Die erste Speicherleuchtstoffolie 6 ist durch eine Abschirmplatte 7, die beispielsweise aus 0,5 mm dickem Blei besteht, abgedeckt. Auf die Abschirmplatte 7 folgt eine Schicht zur Aufnahme des Präparates 8, das mit einer zweiten Speicherleuchtstoffolie 9 in Verbindung steht. Eine zweite Andruckplatte 10 drückt aufgrund der Kraft einer Feder 11, die sich am Deckel 3 der Kassette 1 abstützt, die Schichtanordnung 5 bis 10 zusammen. Die Kassette 1 ist außen mit einer Wärmeisolierung 12, beispielsweise aus Styropor bestehend, umgeben.

Zur Belichtung wird das strahlenemittierende Präparat 8 in die Kassette 1 eingeführt, wobei die von dem Präparat 8 ausgehenden Strahlen in der Leuchtstoffschicht der zweiten Speicherleuchtstoffolie 9 derart absorbiert werden, daß in der Leuchtstoffschicht Defektelektronen erzeugt werden, die in einer Potentialfalle des Leuchtstoffes, in Traps, festgehalten werden, so daß das von dem Präparat 8 ausgehende Strahlenmuster in dem Speicherleuchtstoff gespeichert bleibt. Die Anzahl der Defektelektronen hängt von dem Betrag der absorbierenden Bestrahlungsenergie ab. Die von dem Präparat 8 ausgehenden Strahlen können, da sie Strahlen niedriger Energie sind, die Abschirmplatte 7 nicht durchdringen, so daß die erste Speicherleuchtstoffolie 6 nicht belichtet wird. Die hochenergetischen Strahlen dagegen, beispielsweise die kosmische Strahlung, werden durch die Abschirmplatte 7 wenig beeinflußt, so daß diese Strahlung beide Speicherleuchtstoffolien 6 und 9 gleichermassen belichtet.

Das Material der Abschirmplatte 7 kann durch geeignete Kombinationen so gewählt werden, daß die Strahlung des Präparates 8 sehr stark gegenüber der kosmischen Strahlung reduziert wird. Die Filtermaterialien hängen von der Energie der Strahlung des Präparates 8 ab.

Zur Wiedergabe des latent gespeicherten Bildes wird die Speicherleuchtstoffolie 6 oder 9, wie in Figur 2 dargestellt, von einem Laserstrahl 13 bildpunktweise abgetastet, der von einem Laser 14 erzeugt und von einer Ablenkvorrichtung 15 über die Fläche der Speicherleuchtstoffolie 6 oder 9 abgelenkt wird. Die Ablenkvorrichtung 15 für den Laserstrahl 13 kann beispielsweise aus einem Ablenkspiegel für die vertikale und einem elektrooptischen Strahlenablenker für die horizontale Ablenkung bestehen. Durch die Abtastung mit dem Laserstrahl 13 werden alle auf der Speicherleuchtstoffolie 6 oder 9 liegenden Bildpunkte nacheinander derart angeregt, daß die Defektelektronen aus den Potentialfallen energetisch angehoben werden und anschließend unter Aussendung von Licht in ihr ursprüngliches Energieniveau zurückfallen können. Eine Optik 16 leitet das von der Speicherleuchtstoffolie emittierte Licht zu einem Detektor 17, der die Helligkeit der abgetasteten Bildpunkte erfaßt und einer Wiedergabeschaltung 18 zuführt, die aus den einzelnen, analogen Ausgangssignalen des Detektors 17 ein Videosignal zur Darstellung auf einem Monitor 19 erzeugt. Die Wiedergabeschaltung 18 kann Bildspeicher 22, Verarbeitungsschaltungen, beispielsweise eine Subtraktionsvorrichtung 23, und Wandler 20 und 21 enthalten. Eine Steuereinrichtung 24 erzeugt die Steuertakte zur Synchronisation der Ablenkvorrichtung 15, der Wiedergabeschaltung 18 und des Monitors 19.

Die von den Speicherleuchtstoffolien 6 und 9 ausgelesenen Bilder werden durch den Detektor 17 in elektrische Signale umgewandelt, die durch den A/D-Wandler 20 digitalisiert und in dem Bildspeicher 22 eingelesen werden. Anschließend erfolgt in gleicher Weise die Auslesung der zweiten Speicherleuchtstoffolie 6, wobei das Ausgangssignal des Detektors 17 beispielsweise ebenfalls in dem Bildspeicher 22 an einem anderen Speicherplatz abgespeichert werden kann. Anschließend erfolgt die Verarbeitung beider Signale, indem von dem Strahlenbild mit Nutzinformation der zweiten Speicherleuchtstoffolie 9 das Strahlenbild ohne Nutzinformation der ersten Speicherleuchtstoffolie 6, das nur die Störstrahlen enthält, subtrahiert wird. Dieses Subtraktionssignal wird über den D/A-Wandler 21 in ein analoges Videosignal umgesetzt, das auf dem Monitor 19 wiedergegeben wird, so daß man eine störstrahlenfreie Abbildung des Präparates 8 erhält.

Zur Reduzierung des thermischen Rauschens in den Speicherleuchtstoffolien 6 und 9 wird die Kassette 1 vor Einführung des Präparates 8 gekühlt. Durch die Wärmeisolierung 12 kann die Kassette 1 auch außerhalb der Kühlvorrichtung, beispielsweise während der Belichtung, aufbewahrt werden, ohne daß sie sich in unerwünschtem Maße erwärmt und das thermische Rauschen auftreten kann. Erst zur Abtastung der Speicherleuchtstoffolien 6 und 9 durch den Laserstrahl 13 wird die Kühlung unterbrochen.

Durch diese Vorrichtung erhält man Abbildungen des Präparates 8, die im wesentlichen von Störstrahlen, hervorgerufen durch die kosmische Strahlung sowie das thermische Rauschen, befreit sind.

## Ansprüche

1. Autoradiographiesystem für Speicherleuchtstoffolien (6, 9) mit einer Kassette (1) zur Aufnahme von Präparaten (8) und Speicherleuchtstoffolien (6, 9), einer Leseeinheit (13 bis 17) zum Auslesen der in den Speicherleuchtstoffolien (6, 9) gespeicherten Bilder und zur Erzeugung von diesen Bildern entsprechenden Bildsignalen, mit einer Verarbeitungsschaltung (23) und einer Wiedergabeeinrichtung (19), **dadurch gekennzeichnet,** daß die Kassette (1) ein hochenergetische Strahlen absorbierendes Gehäuse (2) mit Deckel (3), Verschluß (4), Abschirmung (25) und Andruckmittel (5, 10, 11) aufweist, wobei in der Kassette (1) zwei durch eine Abschirmplatte (7) getrennte Speicherleuchtstoffolien (6, 9) vorhanden sind, und daß die Verarbeitungsschaltung eine Subtraktionsvorrichtung (23) aufweist, die die Bildsignale der beiden durch die Leseeinheit (13 bis 17) aus den beiden Speicherleuchtstofffolien (6, 9) ausgelesenen Bilder voneinander subtrahiert.

2. Autoradiographiesystem nach Anspruch 1, **dadurch gekennzeichnet,** daß die Kassette (1) mit einer Wärmeisolierung (12) versehen ist.

3. Autoradiographiesystem nach Anspruch 1 oder 2, **dadurch gekennzeichnet,** daß eine Kühlvorrichtung für die Kassette (1) vorgesehen ist.

4. Autoradiographiesystem nach einem der Ansprüche 1 bis 3, **dadurch gekennzeichnet,** daß die Abschirmplatte (7) aus Blei besteht.

5. Autoradiographiesystem nach einem der Ansprüche 1 bis 4, **dadurch gekennzeichnet,** daß die Abschirmplatte (7) 0,5 mm oder weniger stark ist.

6. Autoradiographiesystem nach einem der Ansprüche 1 bis 5, **dadurch gekennzeichnet,** daß die Abschirmung (25) des Gehäuses (2) aus 1 bis 2 mm dickem Blei besteht.

7. Autoradiographiesystem nach einem der Ansprüche 1 bis 6, **dadurch gekennzeichnet,** daß die Andruckmittel wenigstens eine Andruckplatte (5, 10) aufweisen, die durch eine sich an der Kassette (1) abstützende Feder (11) belastet ist.

FIG 1

FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 112 469 (FUJI PHOTO FILM CO. LTD) * Zusammenfassung; Seite 11, Zeilen 8-27; Seite 19, Zeile 12 - Seite 21, Zeile 28; Seite 22, Zeilen 14-25; Seite 34, Zeilen 17-19 * --- | 1,4 | G 01 T 1/29 H 05 G 1/60 |
| Y | EP-A-0 137 453 (GENERAL ELECTRIC CO.) * Zusammenfassung; Seite 6, Zeilen 9-13; Seite 8, Zeile 10 - Seite 10, Zeile 17; Seite 12, Zeile 28 - Seite 13, Zeile 7; Seite 14, Zeile 17 - Seite 15, Zeile 15; Seite 22, Zeilen 1-27; Seite 35, Zeilen 7-13; Figuren * --- | 1,4 | |
| A | SCIENTIFIC AMERICAN, Band 221, Nr. 2, August 1969, Seiten 125-129, New York, US; C.L. STONG: "Color photographs of the night sky are made by refrigerating the film" * Insgesamt * ----- | 3 | |

**RECHERCHIERTE SACHGEBIETE (Int. Cl.4)**

G 01 T
H 05 G

Der vorliegende Recherchenbericht wurde für alle Patentansprüche erstellt

| Recherchenort | Abschlußdatum der Recherche | Prüfer |
|---|---|---|
| DEN HAAG | 17-01-1989 | DATTA S. |

**KATEGORIE DER GENANNTEN DOKUMENTE**

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes
Dokument

EPO FORM 1503 03.82 (P0403)